# EUROPÄISCHE PATENTSCHRIFT

(11) **EP 2 438 294 B1**
(45) Veröffentlichungstag und Bekanntmachung des Hinweises auf die Patenterteilung: **13.03.2013**
(21) Anmeldenummer: 11734006.7
(22) Anmeldetag: 01.07.2011
(51) Int. Cl.: F03B 13/26, F03B 17/06

(54) **VERFAHREN UND VORRICHTUNG ZUR INSTALLATION EINES GEZEITENKRAFTWERKS**
METHOD AND DEVICE FOR INSTALLING A TIDAL POWER PLANT
PROCÉDÉ ET DISPOSITIF D'INSTALLATION D'UNE CENTRALE MARÉMOTRICE

(30) Priorität: 09.08.2010 DE 102010033788
(43) Veröffentlichungstag der Anmeldung: 11.04.2012
(73) Patentinhaber: Voith Patent GmbH, 89522 Heidenheim (DE)
(72) Erfinder: HAYEMAN, Jason, London (GB)
(74) Vertreter: Dr. Weitzel & Partner
(86) Internationale Anmeldenummer: PCT/EP2011/003269
(87) Internationale Veröffentlichungsnummer: WO 2012/019673

(56) Entgegenhaltungen:
- WO-A1-2009/124344
- DE-A1-102008 020 964
- GB-A- 2 431 628

## Beschreibung

Die Erfindung betrifft ein Verfahren und eine Vorrichtung zur Installation eines Gezeitenkraftwerks an einer schwimmfähigen oder auf dem Gewässergrund fundamendierten Stützstruktur.

Zur Energiegewinnung aus einer Meeresströmung, insbesondere einer Gezeitenströmung, wurde die Verwendung frei umströmter Wasserturbinen vorgeschlagen. Eine mögliche Ausführungsform sieht eine propellerförmige Wasserturbine vor, die an einer Maschinengondel drehbar gelagert ist. Typischerweise befindet sich innerhalb der Maschinengondel ein von der Wasserturbine angetriebener elektrischer Generator.

Dabei setzt eine wirtschaftliche Nutzung von Gezeitenströmungen großbauende Anlagen voraus, die aufgrund ihres hohen Gewichts und des Anlagenstandorts im Meer schwierig zu installieren sind. Aus diesem Grund wurde vorgeschlagen, die zur Installation verwendeten Wasserfahrzeuge speziell an die jeweilige Anlage anzupassen. Beispielsweise beschreibt die EP 1980746 B1 einen schwimmfähigen Ponton mit einer Zentralöffnung, der das Absetzen einer Gesamtanlage, bestehend aus einem Gezeitenkraftwerk und der zugehörigen Fundamentierung am Anlagenstandort ermöglicht. Dies setzt aufgrund des hohen Anlagengewichts voraus, dass das Spezialschiff mit entsprechend dimensionierten Hebewerken und Auftriebskapazitäten ausgestattet ist. Des Weiteren führt das Absenken der Gesamtanlage einschließlich des Fundaments zur Folgeproblematik, dass die Anlage am Gewässergrund nivelliert werden muss. Zusätzlich sind die Auflagepunkte des Fundaments nach dem Absetzen zu sichern.

Zur Umgehung dieser Problematik wurde vorgeschlagen, eine Anlageninstallation in zwei Schritten vorzunehmen. Zunächst wird eine Fundamentstruktur nach einer Seebettvorbereitung errichtet. Hierbei kann es sich beispielsweise um eine Monopilegründung oder die Anlage eines Schwerkraftfundaments handeln. Über dem eigentlichen Fundament erhebt sich ein Stützwerk, typischerweise ein Turm, an den das Gezeitenkraftwerk in einem zweiten, nachfolgenden Installationsschritt an einer zugeordneten Kopplungsvorrichtung aufgesetzt wird. Für derartige Anlagen wird beispielsweise auf die DE 10 2008 020 965 A1 verwiesen.

Für die Installation einer zweiteiligen Anlage ist es notwendig, das Gezeitenkraftwerk mit seiner Kopplungsvorrichtung präzise und sicher gegen das Kopplungsgegenstück an der ortsfesten Stützstruktur zu führen. Hierzu wurden in der GB 24 37 533 A und der DE 10 2008 032 625 B3 Hebewerke vorgeschlagen, die über einen Schiffskran auf einem Installationsschiff bedient werden. Die Problematik eines solchen Installationsverfahrens besteht darin, dass die auf das Schiff wirkenden Kräfte aufgrund der Wind- und Wellenbewegungen vom Absenkvorgang des Gezeitenkraftwerks zu trennen sind. Zu diesem Zweck kommen geregelte, lastentkoppelnde Kransysteme in Frage. Allerdings führt ein solcher Ansatz im Hinblick auf die für die Installation von Gezeitenkraftwerken notwendigen großen Traglasten zu einem hohen Aufwand für die Stellaktorik des Hebewerks.

Eine zusätzliche Schwierigkeit bei einer Anlageninstallation mittels eines Schiffskrans besteht darin, dass die kritische Endannäherung zwischen der Kopplungsvorrichtung am Gezeitenkraftwerk und dem Kopplungsgegenstück der Stützstruktur von der Oberfläche lediglich indirekt, beispielsweise mittels eines Videosystems, überwacht werden kann. Daher wurde durch die WO 2004 015264 A1 ein Installationsverfahren vorgeschlagen, für das zwischen einem Installationsfahrzeug und der Stützstruktur Führungsseile aufgespannt werden, entlang denen das Absenken der Anlage erfolgt. Dies führt insbesondere zu dem Vorteil, dass in der Phase der Endannäherung das Gezeitenkraftwerk automatisch entlang des Schlussabschnitts der Führungsseile zur Kopplungsstelle geführt wird. Nachteilig ist jedoch, dass das Aufspannen von Führungsseilen zwischen der Stützstruktur und dem sich an der Wasseroberfläche befindenden Installationsfahrzeug wiederum durch Wellenbewegungen beeinflusst wird. Durch die hieraus resultierenden Zugspannungen oder Losen im Seilsystem kann es zu unkontrollierten Bewegungen des abzusenkenden Gezeitenkraftwerks kommen, was insbesondere beim eigentlichen Kopplungsvorgang die Gefahr von Schäden an der Kopplungsvorrichtung erhöht.

GB 2431628 offenbart eine vorrichtony zur Installation eines wellen- und gezeitenkraftwerks.

Der Erfindung liegt die Aufgabe zugrunde, eine von der Wellenbewegung an der Gewässeroberfläche nur geringfügig beeinflusste Installationsvorrichtung und ein zugehöriges Installationsverfahren anzugeben. Dabei soll die Installationsvorrichtung wiederverwendbar und skalierbar sein. Sie soll ferner nur eine geringe schiffseitige Hebekapazität voraussetzen sowie eine schnelle und sichere Installation ermöglichen. Ferner soll die Installationsvorrichtung zur Bergung eines Gezeitenkraftwerks geeignet sein, um eine Wartung oder einen Anlagenaustausch ausführen zu können.

Die der Erfindung zugrunde liegende Aufgabe wird durch die Merkmale der unabhängigen Ansprüche gelöst. Dabei haben die Erfinder erkannt, dass zur Installation eines Gezeitenkraftwerks auf einer tauchenden Stützstruktur, insbesondere einem Turm, das Gezeitenkraftwerk mit einer abnehmbaren Schwimmvorrichtung zu versehen ist, wobei die durch diese Kopplung entstehende Installationseinheit eine einstellbare Auftriebskraft aufweist. Die durch den Auftrieb bedingte Vertikalkraft ermöglicht, die Installationseinheit mittels einer von der Stützstruktur ausgehenden Seilzuganordnung gegen die Kopplungsvorrichtung zu ziehen.

Besonders bevorzugt wird die Schwimmvorrichtung mit Trimmtanks ausgestattet, um eine definierte Lage der Installationseinheit in Abhängigkeit der Anströmungs-, Auftriebs- und Seilzugkräfte festzulegen und mittels der Zugseilanordnung die Kopplungsvorrichtung am Gezeitenkraftwerk in einer vorbestimmten Horizontallage zum Kopplungsgegenstück an der Stützstruktur zu führen. Bevorzugt wird ferner, das Einholen der Zugseile der Zugseilanordnung über Motorwinden an der Schwimmvorrichtung auszuführen. Demnach zieht sich die Installationseinheit durch eigene Kraft an die Stützstruktur heran.

Die Schwimmvorrichtung wird möglichst einfach und damit ausfallsicher ausgebildet. Neben den Seilwinden wird bevorzugt das Druckluftsystem für den Betrieb von Ballasttanks sowie die hierfür notwendige Steuerung in die Schwimmvorrichtung integriert. Die Leistungsversorgung und bevorzugt eine Steuersignalleitung zur Ausführung von Steuerungs- und Regelungsaufgaben beziehungsweise die Übermittlung sensorischer Daten, können dann mittels einer Kabelverbindung zu einem Versorgungsschiff bis über die Wasseroberfläche geführt werden. Zusätzlich wird für eine bevorzugte Ausgestaltung das Leistungskabel des Gezeitenkraftwerks noch an der Wasseroberfläche mit der Anlage verbunden. Dabei nehmen die Versorgungsleitung und das Leistungskabel im Wesentlichen keine Last auf, sodass die Installationseinheit mit zunehmender Tauchtiefe von den Krafteinflüssen an der Wasseroberfläche, die insbesondere aus der Wellenbewegung resultieren, entkoppelt ist. Entsprechend wird die Installationseinheit insbesondere in der kritischen Endphase der Turmannäherung weitgehend durch vorhersehbare Kraftwirkungen aufgrund der Anströmung und der einstellbaren Auftriebs- und Seilzugkräfte beeinflusst.

Zum Anlagenstandort wird die Installationseinheit aus Gezeitenkraftwerk und Schwimmvorrichtung mit weitgehend entleerten Ballasttanks und damit einer ausreichenden Sicherheitsreserve für den Auftrieb mittels eines Schiffsfahrzeugs geschleppt. Am Anlagenstandort wird dann die Zugseilanordnung zwischen der tauchenden Stützstruktur und der Installationseinheit aufgebaut. Hierzu kann ein Tauchroboter eingesetzt werden, der Zugseile an turmseitigen Anlenkpunkten befestigt. Alternativ wird von einer permanenten Anbringung der Zugseile an der Stützstruktur ausgegangen, wobei die freien Enden der Zugseile entweder dauerhaft über Schwimmkörper an der Wasseroberfläche gehalten oder über fernauslösbare Schwimmer bis zur Ausführung der Installation auf dem Gewässergrund im Bereich der Stützstruktur abgelegt werden. Weitere Ausgestaltungen sind denkbar, etwa ein Einholsystem für die Fixseile vorzusehen, das im Innern der Stützstruktur angelegt ist.

Nach der Errichtung der Zugseilanordnung wird das Schleppseil zwischen der Installationseinheit und dem Schlepper abgekoppelt und lediglich die Versorgungsleitung zum Schiffsfahrzeug aufrechterhalten. Sodann werden Ballasttanks der Schwimmvorrichtung gefüllt, um den Auftrieb zu reduzieren, wobei dieser einen positiven Wert behält, sodass die Installationseinheit weiter schwimmfähig bleibt und mittels der Zugseilanordnung entgegen der stabilisierenden Kraftwirkung durch die Auftriebskraft gegen die Kopplungsvorrichtung am Turm gezogen werden kann.

Das Absenken der Installationseinheit erfolgt bevorzugt unter Anströmung. Dies - führt zu einer leeseitigen Lage der Wasserturbine im Verlauf der Annäherung an die Stützstruktur. Zur Lagestabilisierung sind Trimmtanks vorgesehen, die bevorzugt als geschlossenes System ausgebildet sind. Des Weiteren umfasst die Seilzuganordnung bevorzugt wenigstens zwei zueinander beabstandete Zugseile. Hieraus folgt, dass der Auftrieb einer Drehbewegung der Installationseinheit um die Vertikalachse entgegenwirkt, da dies zu einer Verdrillung und einer Verkürzung der Zugseilanordnung führen würde. Des Weiteren werden zur Stabilisierung am Schwimmkörper mehrere schwimmvorrichtungsseitige Anlenkpunkte für die Zugseilanordnung vorgesehen. Bevorzugt sind an einem Teil dieser Anlenkpunkte Motorwinden angeordnet. Von den nicht motorisierten Anlenkpunkten gehen Fixseile zu Umlenkrollen, um die die einholbaren Zugseile bevorzugt solange einen nicht verschwindenden Umschlingungswinkel aufweisen bis die Kopplungsvorrichtung am Gezeitenkraftwerk zum Kopplungsgegenstück am Turm geführt ist.

Nach dem Absetzen der Installationseinheit und der Ausführung der Kopplung zwischen dem Gezeitenkraftwerk und der Stützstruktur gibt die Schwimmvorrichtung das Gezeitenkraftwerk wieder frei. Zur Vorbereitung des damit einhergehenden Lastwechsels werden Lastkompensationstanks an der Schwimmvorrichtung gefüllt. Außerdem wird bevorzugt ein Wechsel der Anströmungsrichtung abgewartet, um durch den Strömungsdruck die Schwimmvorrichtung sicher von der Wasserturbine freizuhalten.

Für eine Weitergestaltung der Erfindung wird die Schwimmvorrichtung zu einer Bergung eines sich in Betriebsstellung auf einer Stützstruktur befindlichen Gezeitenkraftwerks verwendet. Hierzu erfolgt eine Annäherung der mit einem positiven Auftrieb versehenen Schwimmvorrichtung über die voranstehend erläuterte Zugseilanordnung zur tauchenden Maschinengondel des Gezeitenkraftwerks. Bevorzugt wird wiederum ein Heranführen unter Anströmung, sodass die Schwimmvorrichtung rückseitig, d.h. von der Wasserturbine abgewandten Seite aus, angenähert wird.

Außerdem wird zum Schutz der Wasserturbine die Schwimmvorrichtung zunächst im Bereich des Gondelgehäuseabschlusses an der zur Wasserturbine gegenüberliegenden Seite angekoppelt. Um eine Berührung mit der Wasserturbine zu vermeiden, kann ferner an der Schwimmvorrichtung ein axialer Anschlag vorgesehen sein. Des Weiteren wird die Schwimmvorrichtung mit einer gewissen Schräglage zur Maschinengondel geführt, wodurch ein Erstkontakt mit der zur Wasserturbine gegenüberliegenden Seite resultiert. Erst in einem nachfolgenden Schritt wird die Horizontallage eingenommen und die weiteren Kopplungsstellen in der Nähe der Wasserturbine zwischen dem Gezeitenkraftwerk und der Schwimmvorrichtung fixiert. Sodann wird der Lastkompensationstank der Schwimmvorrichtung entleert und ein Strömungsrichtungswechsel abgewartet, um mittels eines Abspulens der Zugseilanordnung die Wasserturbine in einer sicheren, schräg verlaufenden Trajektorie von der Stützstruktur wegzuführen.

Nachfolgend wird die Erfindung anhand eines bevorzugten Ausführungsbeispiels in Verbindung mit Figuren genauer beschrieben, in denen im Einzelnen Folgendes dargestellt ist:
- Figur 1: zeigt eine erfindungsgemäße Installationseinheit zum Absetzen eines Gezeitenkraftwerks auf einer Stützstruktur in Form eines Turms.
- Figur 2: zeigt eine schematisch vereinfachte, erfindungsgemäße Installationseinheit in Draufsicht.
- Figuren 3a und 3b: zeigen die Einleitung des erfindungsgemäßen Installationsverfahrens.
- Figur 4: zeigt eine erfindungsgemäße Installationseinheit, die zu Beginn der Installation in Verbindung zu einem Schlepper und zu einem sich gegen den Gewässergrund abstützenden Turm steht.
- Figuren 5a - 5d: zeigen die Endannäherung einer erfindungsgemäßen Installationseinheit an den Turm bis zum Aufsetzen der Kopplungsvorrichtung an der Maschinengondel des Gezeitenkraftwerks auf ein Kopplungsgegenstück am Turm.
- Figuren 6a - 6c: zeigen den Vorgang des Abkoppelns einer erfindungsgemäßen Schwimmvorrichtung von einem Gezeitenkraftwerk, nachdem dieses in Betriebsstellung auf den Turm installiert wurde.
- Figuren 7a - 7c: zeigen die Ankopplung einer erfindungsgemäßen Schwimmvorrichtung an ein in Betriebsposition befindliches Gezeitenkraftwerk zur Ausführung einer Demontage der Anlage.

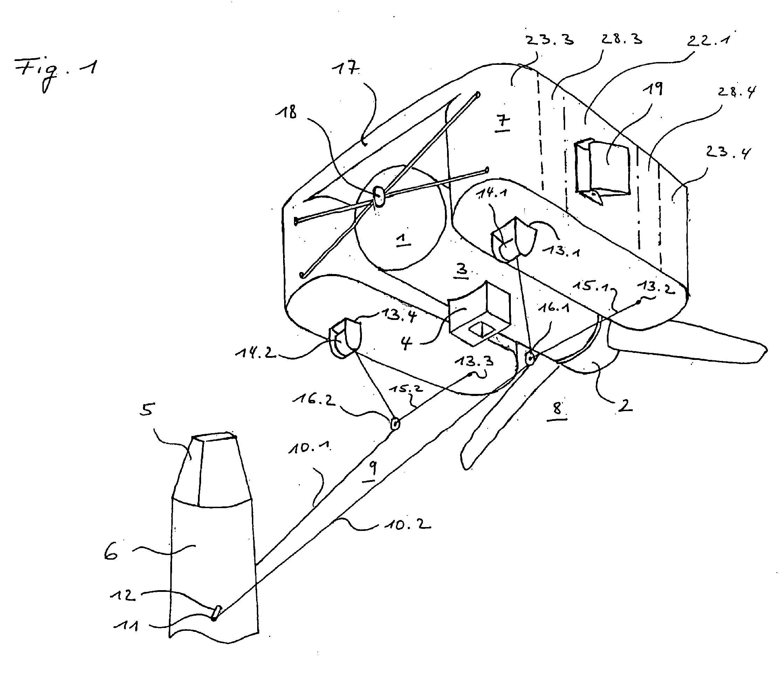

In Figur 1 ist schematisch vereinfacht eine erfindungsgemäße Schwimmvorrichtung 7 dargestellt, an der ein gattungsgemäßes Gezeitenkraftwerk 1 angekoppelt ist. Durch die Kopplung entsteht eine Installationseinheit 8, die dazu dient, ein Gezeitenkraftwerk 1, das eine Wasserturbine 2 und eine Maschinengondel 3 umfasst, auf einer Stützstruktur abzusetzen, die das Gezeitenkraftwerk 1 während des Betriebs in Position hält. Für die dargestellte Ausgestaltung wird bei Installation das Gezeitenkraftwerk 1 auf einen Turm 6 abgesetzt. Hierbei handelt es sich um eine auf einem Gewässergrund abgestützte Komponente, der zur Gründung beispielsweise ein Schwerkraftfundament zugeordnet ist. Alternativ kann dem Turm 6 eine Monopile-Gründung aufweisen. Eine solche wird in den nachfolgenden Ausführungsbeispielen dargestellt. Denkbar sind jedoch auch andere Ausführungsformen, etwa eine schwimmfähige, auf dem Gewässergrund verankerte Stützstruktur, auf die der gezeigte Turm 6 aufgesetzt ist. Dabei wird bei der Installation eine Verbindung zwischen der Kopplungsvorrichtung 4 an der Maschinengondel 3 des Gezeitenkraftwerks 1 und dem Kopplungsgegenstück 5 am Turm 6 der Stützstruktur hergestellt.

Die erfindungsgemäße Schwimmvorrichtung 7 umschließt die Maschinengondel 3 in Form eines Bügels mit einer nach unten weisenden und axial verlaufenden Öffnung zur Aufnahme der Maschinengondel 3. Dabei wird die Schwimmvorrichtung 7 bevorzugt so gestaltet, dass ein direkter Anlagekontakt der Maschinengondel 3 an mehreren Stellen zur Wandung der Schwimmvorrichtung 7 besteht. Zusätzlich wird die Kopplung zwischen der Maschinengondel 3 und der Schwimmvorrichtung 7 durch mehrere lösbare Kopplungselemente gesichert, die im Einzelnen nicht dargestellt sind.

Im vollständig getauchten Zustand weist die Installationseinheit 8 einen positiven Auftrieb auf, sodass diese mittels einer Zugseilanordnung 9 gegen die Wirkung der Auftriebskraft und der an der Installationseinheit 8 angreifenden Strömungskräfte bis zur Ankopplungsposition herangezogen werden kann. Hierzu dient eine Zugseilanordnung 9, die bevorzugt eine paarweise Anordnung von Zugseilen 10.1, 10.2 aufweist. Diese verlaufen jeweils von einem turmseitigen Anlenkpunkt 11 wenigstens mittelbar zu den schwimmvorrichtungseitigen Anlenkpunkten 13.1, 13.2, 13.3 und 13.4. Dabei stabilisieren mehrere Zugseile 10.1, 10.2 das Heranziehen der Installationseinheit 8 gegen den Turm 6, da einer Verdrillung der parallel beabstandeten Zugseile 10.1, 10.2 die Auftriebskraft an der Installationseinheit 8 entgegenwirkt. Dieser Effekt kann durch eine Beabstandung der turmseitigen Anlenkpunkte von der Achse des Turms 6 mittels eines Auslegers 12 verstärkt werden.

Für die in Figur 1 gezeigte bevorzugte Ausgestaltung der Zugseilanordnung 9 verlaufen die Zugseile 10.1, 10.2 über Umlenkrollen 16.1, 16.2 zu getrennt steuerbaren Motorwinden 14.1, 14.2. Um zusätzlich eine Zugwirkung auf die weiteren schwimmvorrichtungsseitigen Anlenkpunkte 13.2, 13.3 zu bewirken, stehen diese mittels der Fixseile 15.1, 15.2 mit den Umlenkrollen 16.1, 16.2 in Verbindung. Auf diese Weise ist es möglich, das Gewicht der motorischen Einheiten in Form der Motorwinden 14.1, 14.2 auf eine paarweise Anordnung zu reduzieren und zusätzlich eine Kraftwirkung auf vier Punkte auf der Unterseite der Schwimmvorrichtung 7 auszuüben. Ein weiterer Vorteil ergibt sich bei einer entsprechenden Dimensionierung der Längen der Fixseile 15.1, 15.2 für die Endphase der Installation beziehungsweise zu Beginn der Demontage in unmittelbarer Nähe zum Turm 6. Dieser Vorgang wird nachfolgend noch detaillierter erläutert.

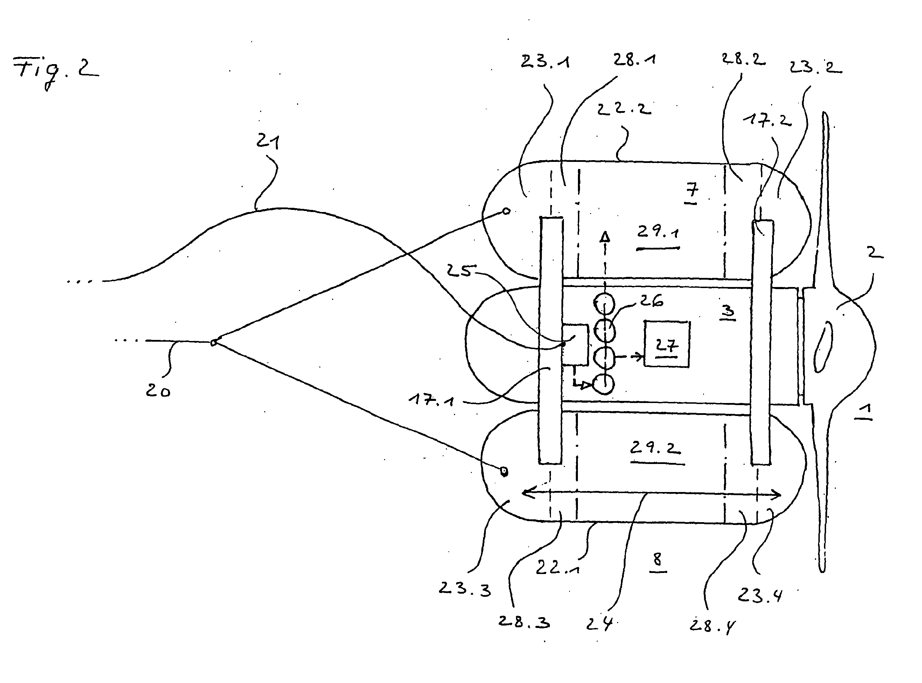

Figur 2 zeigt eine Draufsicht auf eine Prinzipienskizze der für die Installation verwendeten Schwimmvorrichtung 7 für ein Gezeitenkraftwerk 1. Gezeigt sind die Seitentanks 22.1, 22.2 der Schwimmvorrichtung 7, die über Querträger 17.1, 17.2 verbunden sind. Hierdurch wird ein Zwischenraum gebildet, der nach unten hin offen ist und der der Aufnahme der Maschinengondel 3 des Gezeitenkraftwerks 1 dient. Die an der Maschinengondel 3 anschließende und in dieser gelagerte Wasserturbine 2 ragt axial über diesen Zwischenraum hinaus und liegt aufgrund ihrer Baugröße außerhalb der Abmessungen der Schwimmvorrichtung 7.

Innerhalb der Seitentanks 22.1, 22.2 befinden sich jeweils an den axialen Enden Trimmtanks 23.1, 23.2, 23.3, 23.4, die jeweils paarweise ein geschlossenes System bilden. So wird mittels der Verbindungsleitung 24 im Seitentank 22.1 Ballastwasser zur Einstellung einer Horizontallage der Installationseinheit 8 zwischen dem vorderen Trimmtank 23.3 und dem hinteren Trimmtank 23.4 umgepumpt. Entsprechend wirken die Trimmtanks 23.1 und 23.2 im weiteren Seitentank 22.2 zusammen. Denkbar ist auch eine Verbindung aller Trimmtanks 23.1- 23.4, um eine Austarierung in Querrichtung zu erreichen. Dies kann unter Umständen notwendig sein, wenn das Gewicht eines beispielsweise dreiblättrig ausgebildeten und während der Installation festgebremsten Rotors der Wasserturbine 2 zu asymmetrischen Gewichts- und Auftriebskräften führt.

Des Weiteren liegen an den Seitentanks 22.1, 22.2 jeweils Ballasttanks 28.1, 28.2, 28.3, 28.4 vor, die zur Einleitung eines Tauchvorgangs geflutet werden. Zusätzlich sind jeweils Lastkompensationstanks 29.1, 29.2 vorgesehen, die den Lastwechsel beim Absetzen beziehungsweise dem Aufnehmen des Gezeitenkraftwerks 1 ausgleichen. Zum Betrieb der Ballasttanks 28.1, 28.2, 28.3, 28.4 ist eine Druckluftversorgung 26 in die Schwimmvorrichtung 7 aufgenommen, die über eine Mess- und Steuereinheit 25 betrieben wird. Diese steht wiederum bevorzugt über eine Versorgungsleitung 21 mit einem Schiffsfahrzeug in Verbindung, die dazu dient, die Leistungsversorgung für die Schwimmvorrichtung 7 sicherzustellen. Des Weiteren wird wenigstens ein Teil der für den Betrieb notwendigen Steuerungs-und Regelungsaufgaben an die Wasseroberfläche verlagert, um die Schwimmvorrichtung 7 möglichst einfach und damit ausfallsicher zu gestalten.

Ferner ist in Figur 2 ein Sicherheitssystem 27 skizziert, das im Fehlerfall zusätzliche Auftriebskörper zur Sicherung der Installationseinheit 8 freisetzen kann. Bevorzugt sind die Mess- und Steuereinheit 25, die Druckluftversorgung 26 und das Sicherheitssystem 27 im Bereich der Querträger 17.1, 17.2 angeordnet. Besonders bevorzugt wird eine geschlossene Ausgestaltung eines Querträgers 17 gemäß der Skizze aus Figur 1, die es ermöglicht, im Innern ausgeschäumte Bereiche anzulegen, die eine Sicherheitsreserve für den Auftrieb für den Fall eines Fehlers der Druckluftversorgung 26 darstellen.

An den Installationsort wird die Installationseinheit 8 im schwimmenden Zustand geschleppt. Zu diesem Zweck ist ein Schleppseil 20 skizziert, das zu einem in Figur 2 nicht im Einzelnen dargestellten Wasserfahrzeug geführt wird. Des Weiteren sind zur Verbesserung der Schleppfahrt an der Wasseroberfläche an den Außenseiten der Seitentanks 22.1, 22.2 Seitenruder 19 angeordnet. Diese sind in Figur 1 dargestellt.

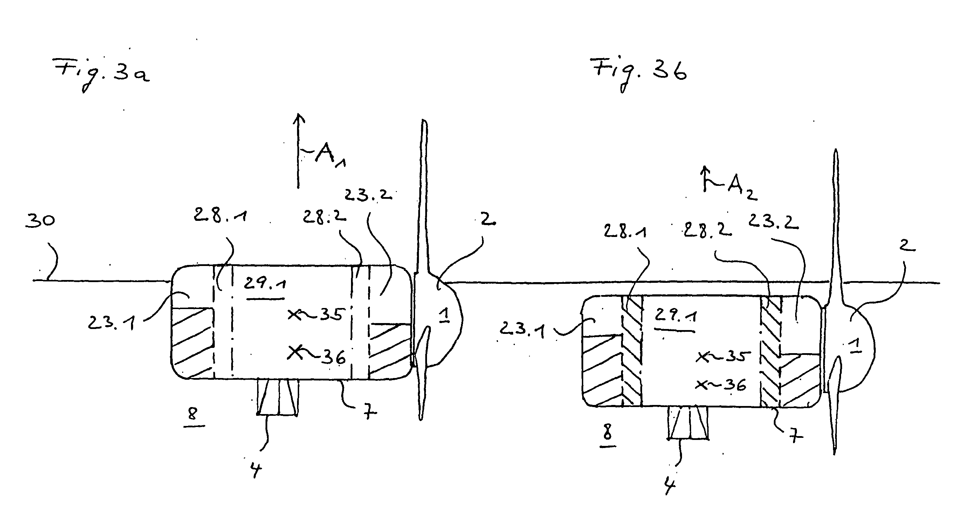

Die Figurenfolge 3a und 3b zeigt die Einleitung der Installation, wobei Figur 3a zunächst den für den Schleppbetrieb geeigneten Betriebszustand darstellt. Ersichtlich ist eine horizontal austarierte Schwimmposition der Installationseinheit 8, wobei durch die selektive Einstellung des Füllstands der gekoppelten Trimmtanks 23.1, 23.2 die axiale Gewichtsverteilung des angekoppelten Gezeitenkraftwerks 1 ausgeglichen wird.

Ferner sind zunächst die Ballasttanks 28.1, 28.2 ebenso wie der Lastkompensationstank 29.1 vollständig entleert, hierdurch ergibt sich eine Auftriebskraft A₁ und eine betriebssichere Lage des Auftriebspunkts 35 und des Schwerpunkts 36. Zur Einleitung der Installation werden, wie in Figur 3b dargestellt, die Ballasttanks 28.1, 28.2 befüllt. Diese sind bevorzugt so dimensioniert, dass bei Vornahme einer vollständigen Füllung weiterhin ein positiver Auftrieb A₂ und eine betriebssichere Lage des Auftriebspunkts 35 relativ zum Schwerpunkt 36 folgen. Eventuell ist mit einem weiteren Eintauchen der Schwimmvorrichtung 7 sowie der zuvor noch gegenüber der Wasseroberfläche befindlichen Komponenten der Wasserturbine 2 eine Veränderung des Füllstands in den Trimmtanks 23.1, 23.2 vorzunehmen.

Bei dem in Figur 3b skizzierten Betriebszustand wird der Auftrieb so weit reduziert, dass ein Heranziehen der Installationseinheit an den Kopplungsbereich am Turm 6 möglich wird. Zugleich muss der positive Auftrieb A₂ ständig beibehalten werden, da eine gesicherte Annäherung der Installationseinheit 8 an den Turm eine permanente Spannung in der Zugseilanordnung 9 und demnach ein motorisches Heranziehen der Installationseinheit 8 an den Turm 6 voraussetzt. -

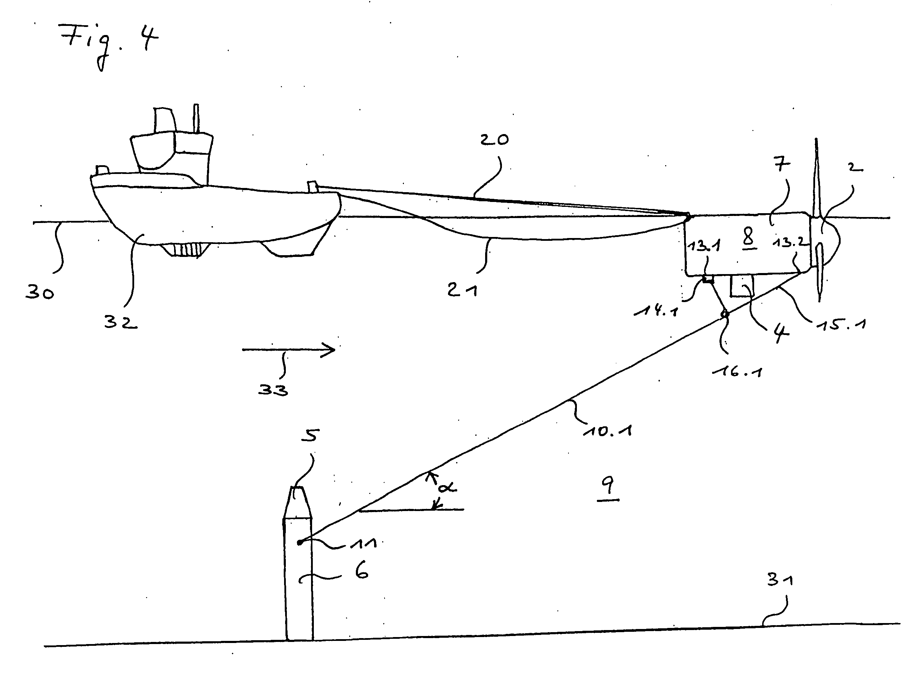

Figur 4 zeigt eine bereits hergestellte Verbindung mittels der Zugseilanordnung 9 zwischen dem Turm 6 am Gewässergrund 31 und dem dort vorgesehenen turmseitigen Anlenkpunkt 11 und den schwimmvorrichtungsseitigen Anlenkpunkten 13.1, 13.2. Zum Aufbau dieser Zugseilanordnung 9 wird entweder ein im Einzelnen nicht dargestellter Tauchroboter verwendet oder es besteht eine permanente Verbindung zwischen dem turmseitigen Anlenkpunkt 11 und dem daran angebrachten Zugseil 10.1. Denkbar ist, zu diesem Zweck entweder das Zugseil 10.1 bis zur Ausführung einer Installation über eine Boje, die den Installationsort markiert, mit dem freien Ende an der Wasseroberfläche 30 zu halten. Alternativ kann das am Turm 6 befestigte Zugseil 10.1 mit einer fernauslösbaren Auftriebseinheit bei der Errichtung des Turms 6 auf den Gewässergrund 31 abgelegt werden. Denkbar ist ferner die Verwendung einer Seiltrommel für das Zugseil im Innern des Turms 6, die über eine Funkverbindung aus der Entfernung betrieben werden kann, um ein selbständig auftreibendes Seilende zur Einleitung einer Installation bis zur Oberfläche abzuwickeln.

Gemäß der in Figur 4 dargestellten Ausgestaltung läuft das Zugseil 10.1 der Zugseilanordnung 9 ausgehend vom turmseitigen Anlenkpunkt 11 über eine Umlenkrolle 16.1 zur Motorwinde 14.1. Diese definiert einen ersten schwimmvorrichtungsseitigen Anlenkpunkt 13.1. Für einen weiteren Anlenkpunkt 13.2 besteht eine Verbindung mittels eines Fixseils 15.1 mit einer festgelegten Länge bis zur Umlenkrolle 16.1. Für die dargestellte schematische Vereinfachung wird lediglich ein Zugseil 10.1 gezeigt. Bevorzugt wird jedoch die Verwendung einer paarweisen Anordnung von wenigstens zwei Zugseilen 10.1, 10.2 zur Lagestabilisierung im Verlaufe des Heranziehens der Schwimmvorrichtung 7 an den Turm 6.

Bevorzugt wird die Installation bei einer gewissen Anströmung ausgeführt, hierbei soll eine Strömungsrichtung 33 vorliegen, die die Installationseinheit 8 so orientiert, dass die Wasserturbine 2 leeseitig zur Kopplungsvorrichtung 4 liegt. Hierdurch erfolgt eine Annäherung an den Turm 6, der die Wasserturbine 2 von den Haltestrukturen freihält. Die für die Installation geeignete Strömungsbedingung wird so ausgewählt, dass sich ein vorbestimmter Zugseilwinkel a des Zugseils 10.1 relativ zur Horizontalen einstellt. Bevorzugt wird ein Winkelbereich zwischen 10° und 45°. Größere Zugseilwinkel a entstehen bei einer geringeren Anströmung beziehungsweise bei einer Erhöhung des Auftriebs der Installationseinheit 8. Dabei wird die Verbindung zum Schlepper 32 über das Schleppseil 20 so lange aufrecht erhalten, bis die für die Installation geeigneten Anströmungsbedingungen vorliegen. Außerdem kann der bei der Installation wirkende positive Auftrieb A₂ so auf die vorliegende Anströmung angepasst werden, dass sich der erwünschte Zugseilwinkel a einstellt. Ferner wird die Länge des Fixseils 15.1 bis zur Umlenkrolle 16.1 derart gewählt, dass bevorzugt für den gewählten Zugseilwinkel a im Verlauf der gesamten Turmannäherung ein nicht verschwindender Umschlingungswinkel des Zugseils 10.1 an der Umlenkrolle 16.1 vorliegt.

Für die eigentliche Installation wird dann durch ein Abkoppeln des Schleppseils 20 die Installationseinheit 8 freigegeben, wobei lediglich die Verbindung über die Versorgungsleitung 21 zum Schlepper bestehen bleibt, die jedoch ohne wesentliche Kraftwirkung auf die Installationseinheit 8 ist. Ferner wird bevorzugt das Leistungskabel der Anlage vor dem Abtauchen angebracht, zur Vereinfachung der Darstellung ist ein solches in den Figuren nicht gezeigt.

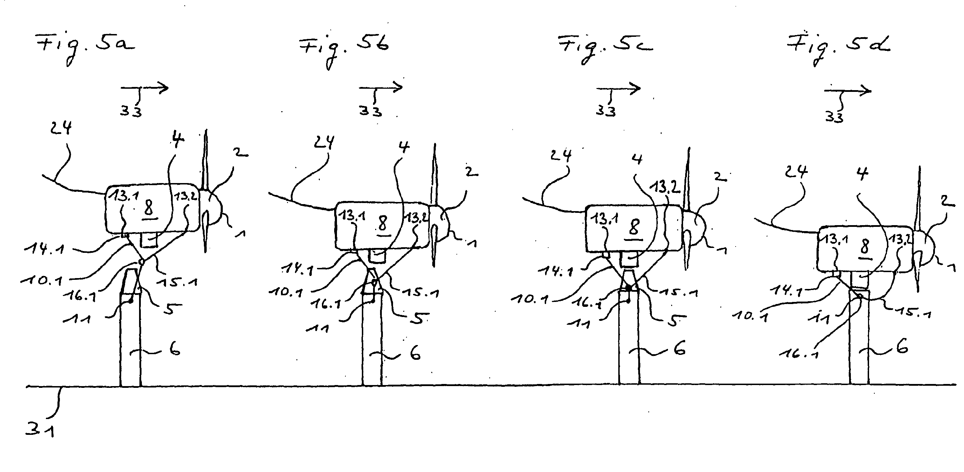

Nach dem Kappen der Zugverbindung über das Schleppseil 20 zum Schlepper 32 und dem Heranziehen der Installationseinheit 8 an den Turm 6 tritt eine Entkopplung von den Witterungs- und Welleneinflüssen an der Wasseroberfläche 30 ein. Dies ist insbesondere für die Phase der Endannäherung, für die eigentliche Kopplung des Gezeitenkraftwerks 1 am Turm 6 vorgenommen wird, von Bedeutung. Diese wird anhand der Figuren 5a - 5d nachfolgend genauer erläutert.

Zunächst liegt die Installationseinheit 8, wie in Figur 5a dargestellt, oberhalb und leeseitig zur Spitze des Turms 6. Mit einem weiteren Einholen des Zugseils 10.1 mittels der Motorwinde 14.1 erfolgt die in den Figuren 5b und 5c dargestellte sukzessive Annäherung der Kopplungsvorrichtung 4 des Gezeitenkraftwerks 1 an das Kopplungsgegenstück 5 am Turm 6. Dabei wird bevorzugt das Fixseil 15.1 auf Zug gehalten, was einen nicht verschwindenden Umschlingungswinkel des Zugseils 10.1 an der Umlenkrolle 16.1 bedingt. Wie in Figur 5c verdeutlicht, ist die Länge des Fixseils 15.1 zur Umlenkrolle 16.1 so gewählt, dass bei einer Verlagerung der Umlenkrolle 16.1 in die Nähe des turmseitigen Anlenkpunkts 11 die Kopplungsvorrichtung 4 des Gezeitenkraftwerks 1 direkt über den Kopplungsgegenstück 5 am Turm 6 steht. Dies setzt eine vorbestimmte Trimmung der Installationseinheit 8 und einen auf die vorliegende Anströmung aus der Strömungsrichtung 33 abgestimmten Auftrieb A₂ voraus. Diese Betriebsparameter sind durch eine Einstellung des Wasserstands in den Trimmtanks 23.1- 23.4, und den Ballasttanks 28.1- 28.4 erzielbar. Nachfolgend wird eine Wirkverbindung zwischen der Kopplungsvorrichtung 4 des Gezeitenkraftwerks 1 und dem Kopplungsgegenstück 5 am Turm 6 durch ein weiteres Einholen des Zugseils 10.1 hergestellt. Dabei wird die Umlenkrolle 16.1, wie in Figur 5d dargestellt, zum turmseitigen Anlenkpunkt 11 geführt und das Fixseil 15.1 übermittelt in der Folge keine Zugkraft auf den schwimmvorrichtungsseitiger Anlenkpunkt 13.2, sodass eine Nickbewegung beim Einführen der Kopplungsvorrichtung 4 in das Kopplungsgegenstück 5 vereinfacht möglich ist.

Ein alternative, vorliegend im Einzelnen nicht dargestellte Ausgestaltung sieht anstatt des Systems mit Fixseilen 15.1 und Umlenkrollen 16.1 jeweils separat einholbare Zugseile in Verbindung mit Motorwinden an jedem einzelnen der schwimmvorrichtungsseitigen Anlenkpunkte 13.1, 13.2, 13.3, 13.4 vor. Diese Lösung bedingt zwar ein höheres Gewicht der motorischen Einheiten und einen höheren Steuerungs- und Regelungsaufwand, allerdings besteht insbesondere für die Endannäherungsphase eine verbesserte Positionierbarkeit der Kopplungsvorrichtung 4 relativ zum Kopplungsgegenstück 5.

Bevorzugt werden die für den sicheren Betrieb notwendigen Betriebsparameter mittels sensorischer Systeme auf der Schwimmvorrichtung 7 erfasst, die im Einzelnen nicht dargestellt sind. Hierfür kommen ein Anströmungssensor sowie ein Lagesensor zur Trimmungskontrolle in Frage. Des Weiteren kann die Endannäherung durch ein auf Bild- oder Sonardaten beruhendes Überwachungssystem unterstützt werden. Ferner sind bevorzugt die Kopplungsvorrichtung 4 und das Kopplungsgegenstück 5 mit einem trichterförmigen Fangbereich und konischen Ablaufflächen versehen, sodass bei einem weiteren Einholen des Zugseils 10.1, die in Figur 5d dargestellte Situation einer Verbindung zwischen der Kopplungsvorrichtung 4 und dem Kopplungsgegenstück 5 eintritt. Bevorzugt sind zusätzlich die Kopplungsvorrichtungen 4 und das Kopplungsgegenstück 5 so gestaltet, dass mit der Kopplung automatisch eine vorbestimmte Orientierung nach dem Schlüssel-Schloss-Prinzip eintritt. Alternativ kann die geeignete Ausrichtung des Gezeitenkraftwerks durch die Strömungskräfte beim Absetzen der Anlage erfolgen. Wie dargestellt richtet sich die Installationseinheit 8 parallel zur Strömungsrichtung 33 aus, die zugleich eine geeignete Betriebsposition darstellt. Durch im Einzelnen nicht dargestellte Mittel wird für diese Ausführung zum Abschluss der Ankopplung die durch die Strömung bedingte Stellung lagefixiert.

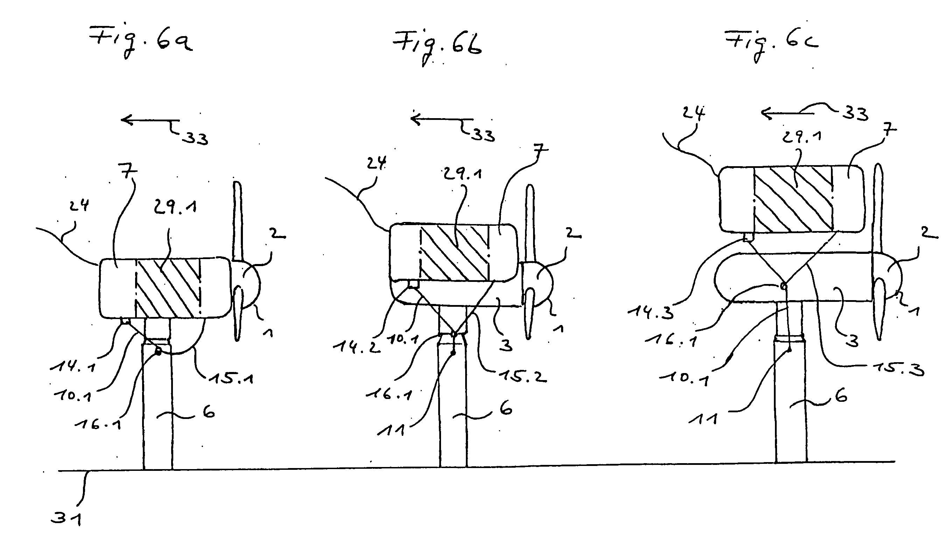

In den Figuren 6a - 6c ist der nach der Ankopplung des Gezeitenkraftwerks 1 am Turm 6 erfolgende Abhebevorgang der Schwimmvorrichtung 7 skizziert. Ausgangspunkt ist zunächst ein vollständig eingeholtes Zugseil 10.1, das Fixseil 15.1 hängt durch, da die Umlenkrolle 16.1 bis unmittelbar zum turmseitigen Anlenkpunkt 11 geführt ist. In diesem Zustand wird zunächst der Lastwechsel beim Ankoppeln vorbereitet. Zu diesem Zweck erfolgt ein Befüllen der Lastkompensationstanks. Dies ist durch die gestrichelte Darstellung des Lastkompensationstanks 29.1 verdeutlicht, wobei das Gewicht der Ballastierung in etwa dem Gewicht des Gezeitenkraftwerks 1 entspricht und die Schwimmvorrichtung 7 nunmehr für sich einen reduzierten, jedoch weiterhin positiven Auftrieb erhält. Nachfolgend wird durch ein Lösen im Einzelnen nicht dargestellter Haltemittel die Entkopplung zwischen der Schwimmvorrichtung 7 und dem Gezeitenkraftwerk 1 vollzogen. Dabei wird bevorzugt der zur Verfügung stehende Auftrieb so dimensioniert, dass Reibungskräfte zum Lösen der Haltemittel sicher überwunden werden.

Wie in Figur 6b dargestellt, erfolgt beim Abheben der Schwimmvorrichtung 7 vom installierten Gezeitenkraftwerk 1 eine Straffung des Fixseils 15.1. Durch ein kontrolliertes Abwickeln des Zugseils 10.1 an der Motorwinde 14.1 wird die Schwimmvorrichtung 7 bis zur Wasseroberfläche 7 gebracht. Für diese Bergung der Schwimmvorrichtung 7 wird ein Wechsel in der Anströmungsrichtung 33 abgewartet, um sicherzugehen, dass beim Freischwimmen der Schwimmvorrichtung 7 keine Kollision mit der Wasserturbine 2 eintreten kann.

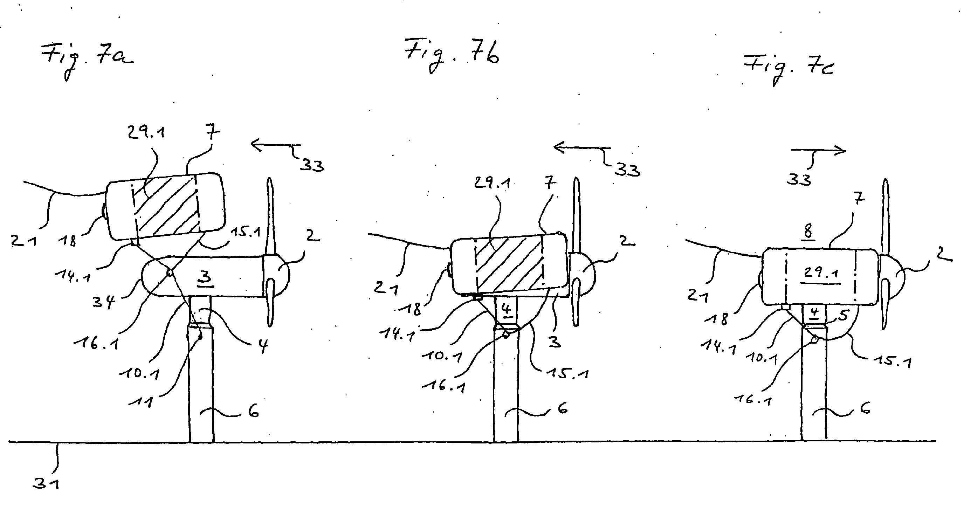

Die Figuren 7a - 7c zeigen als Weitergestaltung des erfindungsgemäßen Verfahrens die Demontage eines in Betriebsposition befindlichen Gezeitenkraftwerks 1, um einen Anlagenaustausch oder einen Service oberhalb des Wasserspiegels ausführen zu können. Zu diesem Zweck wird zunächst, wie in Figur 7a dargestellt, die Schwimmvorrichtung 7 mit dem Zugseil 10.1 an die Maschinengondel 3 des Gezeitenkraftwerks. 1 herangezogen. Dabei wird eine Strömungsrichtung 33 abgewartet, die die Schwimmvorrichtung 7 leeseitig zur Wasserturbine 2 verfrachtet. Bevorzugt liegt wieder ein nicht verschwindender Umschlingungswinkel des Zugseils 10.1 an der Umlenkrolle 16.1 vor.

Zusätzlich zur Annäherung von hinten wird die Trimmung der Schwimmvorrichtung 7 so gesteuert, dass das zur Wasserturbine 2 hinweisende Ende etwas höher liegt als das gegenüberliegende, von der Wasserturbine 2 abgewandte Ende. Durch diese Schräglage tritt die in Figur 7b skizzierte Situation beim weiteren Einholen des Zugseils 10.1 ein. Dabei sitzt die Schwimmvorrichtung 7 zunächst an dem von der Wasserturbine 2 abgewandten Ende der Maschinengondel 3 auf. Bevorzugt ist in diesem Bereich an der Schwimmvorrichtung 7 ein axialer Anschlag 18 vorgesehen, der in Figur 1 detaillierter dargestellt ist. Dieser axiale Anschlag 18 stellt sicher, dass der Gondelgehäuseabschluss 34 auf der zur Wasserturbine 2 gegenüberliegenden Seite des Gondelgehäuses 3 nicht über die vorgegebene axiale Erstreckung der Schwimmvorrichtung 7 hinausreicht. Wird nun der genannte axiale Anschlag 18 gegenüber dem Gondelgehäuseabschluss 34 auf Kontakt gezogen, liegt eine definierte Relativlage zwischen der Schwimmvorrichtung 7 und dem Gondelgehäuse 3 in axialer Richtung vor, die es ermöglicht, im Einzelnen nicht dargestellte, für den Erstkontakt vorgesehene Kopplungsmittel zu schließen. Sodann erfolgt eine horizontale Ausrichtung der Schwimmvorrichtung 7 durch eine entsprechende Anpassung in den Trimmtanks, bis die in Figur 7c gezeigte vollständige Auflage der Schwimmvorrichtung 7 auf der Maschinengondel 3 vorliegt. Daraufhin können sämtliche Kopplungsmittel zwischen der Schwimmvorrichtung 7 und dem Gezeitenkraftwerk 1 geschlossen werden.

Bevor in einem weiteren Schritt die Installationseinheit 8 vom Turm 6 abgehoben werden kann, wird wiederum bevorzugt ein Wechsel der Anströmungsrichtung 33 abgewartet, sodass sichergestellt ist, dass die Wasserturbine 2 ohne Berührung vom Turm 6 freikommt. Des Weiteren wird vor dem Abheben der Lastkompensationstank 29.1 freigeblasen, um den aufgenommenen Gewicht des Gezeitenkraftwerks 1 Rechnung zu tragen und einen positiven Auftrieb der Installationseinheit 8 sicherzustellen. Ferner ist es unter Umständen notwendig, die Reibungskräfte zwischen der Kopplungsvorrichtung 4 und dem turmseitigen Kopplungsgegenstück 5 kontrolliert zu überwinden. Hierzu kann eine im Einzelnen nicht dargestellte Aktorik im Bereich der Kopplungsverbindung vorgesehen sein.

Gemäß einer Weitergestaltung der Erfindung kann die Schwimmvorrichtung 7 für unterschiedliche Gezeitenkraftwerke 1 mit unterschiedlich dimensionierten Maschinengondeln und abweichendem Gewicht anpassbar gestaltet sein. Hierzu ist es denkbar, die Dimension des Aufnahmekanals zwischen den Seitentanks 22.1, 22.2 durch verfahrbare Querträger 17.1, 17.2 verstellbar zu gestalten. Eine Anpassung an unterschiedliche Anlagengewichte und axiale Gewichtsverteilung kann über die Steuerung der Ballast- und Trimmtanks erreicht werden. Des Weiteren kann die Schwimmvorrichtung 7 mit zusätzlichen Einrichtungen ausgestattet sein, die einer Anlagenwartung unter Wasser dienen. Hierzu kann nach dem Andocken der Schwimmvorrichtung 7 an das in Betriebsstellung befindliche Gezeitenkraftwerk 1 beispielsweise ein Austausch von Betriebsmedien vorgenommen werden. Ferner ist es möglich, nach der Ankopplung zur Entfernung maritimen Bewuchses von der Schwimmvorrichtung 7 aus Reinigungsmedien unter Druck in das Innere der Maschinengondel 3 zu injizieren. Des Weiteren ist eine Weitergestaltung der Erfindung möglich, bei der die Schwimmvorrichtung 7 zusätzlich mit einer Tauchglocke versehen ist, die Servicetechnikern nach der Ankopplung einen trockenfallenden und relativ zum Gezeitenkraftwerk 1 lagefixierten Arbeitsraum zur Ausführung von Wartungsarbeiten bietet.

### Bezugszeichenliste

- 1: Gezeitenkraftwerk
- 2: Wasserturbine
- 3: Maschinengondel
- 4: Kopplungsvorrichtung
- 5: Kopplungsgegenstück
- 6: Turm
- 7: Schwimmvorrichtung
- 8: Installationseinheit
- 9: Zugseilanordnung
- 10.1, 10.2: Zugseil
- 11: turmseitiger Anlenkpunkt
- 12: Ausleger
- 13.1, 13.2, 13.3, 13.4: schwimmvorrichtungsseitiger Anlenkpunkt
- 14.1, 14.2: Motorwinde
- 15.1, 15.2: Fixseil
- 16.1, 16.2: Umlenkrolle
- 17, 17.1, 17.2: Querträger
- 18: axialer Anschlag
- 19: Seitenruder
- 20: Schleppseil
- 21: Versorgungsleitung
- 22.1, 22.2: Seitentank
- 23.1, 23.2, 23.3, 23.4: Trimmtank
- 24: Verbindungsleitung
- 25: Mess- und Steuereinheit
- 26: Druckluftversorgung
- 27: Sicherheitssystem
- 28.1, 28.2, 28.3, 28.4: Ballasttank
- 29.1,29.2: Lastkompensationstank
- 30: Wasseroberfläche
- 31: Gewässergrund
- 32: Schlepper
- 33: Strömungsrichtung
- 34: Gondelgehäuseabschluss
- 35: Auftriebspunkt
- 36: Schwerpunkt
- A₁, A₂: Auftrieb
- α: Zugseilwinkel

## Patentansprüche

1. Verfahren zur Installation eines Gezeitenkraftwerks (1) mit einer Wasserturbine (2), die an einer Maschinengondel (3) drehbar gelagert ist, wobei der Maschinengondel (3) eine Kopplungsvorrichtung (4) zum Aufsetzen des Gezeitenkraftwerks (1) auf ein Kopplungsgegenstück (5) an einem Turm (6), der das Gezeitenkraftwerk (1) beim Betrieb trägt, zugeordnet ist, umfassend die folgenden Verfahrensschritte:
1.1 an das Gezeitenkraftwerk (1) wird eine Schwimmvorrichtung (7) zur Bildung einer Installationseinheit (8) angekoppelt, wobei die Auftriebskraft und der Auftriebspunkt (35) der Schwimmvorrichtung (7) einstellbar sind und so gewählt werden, dass die Installationseinheit (8) einen positiven Auftrieb (A₂) aufweist;
1.2 die Installationseinheit (8) wird mittels einer Zugseilanordnung (9) mit dem Turm (6) verbunden, wobei die Zugseilanordnung (9) mit wenigstens einer Motorwinde (14.1, 14.2) auf der Schwimmvorrichtung (7) in Verbindung steht und Anlenkpunkte der Zugseilanordnung (9) so an der Schwimmvorrichtung (7) und dem Turm (6) angeordnet sind, dass beim Einholen der Zugseilanordnung (9) entgegen der auf die Installationseinheit (8) wirkenden Auftriebs- und Strömungskräfte die Kopplungsvorrichtung (4) zum Kopplungsgegenstück (5) geführt wird;
1.3 nach dem Einholen der Zugseilanordnung (9) und dem Aufsetzen der Kopplungsvorrichtung (4) am Gezeitenkraftwerk (1) auf dem Kopplungsgegenstück (5) am Turm (6) wird die Kopplung zwischen der Schwimmvorrichtung (7) und dem Gezeitenkraftwerk (1) gelöst und die Schwimmvorrichtung (7) steigt zur Wasseroberfläche (30) auf.

2. Verfahren nach Anspruch 1, **dadurch gekennzeichnet, dass** eine Trimmungsvorrichtung mit Trimmtanks (23.1, 23.2, 23.3, 23.4) zur Einstellung der Lage der Installationseinheit (8) beim Einholen der Zugseilanordnung (9) verwendet wird.

3. Verfahren nach einem der vorausgehenden Ansprüche, **dadurch gekennzeichnet, dass** das Einholen des Zugseilanordnung (9) bis zum Aufsetzen der Kopplungsvorrichtung (4) auf dem Kopplungsgegenstück (5) unter Anströmung vorgenommen wird, wobei eine Strömungsrichtung (33) vorliegt, die die Wasserturbine (2) leeseitig zum Turm (6) führt.

4. Verfahren nach einem der vorausgehenden Ansprüche, **dadurch gekennzeichnet, dass** vor dem Lösen der Kopplung zwischen der Schwimmvorrichtung (7) und dem Gezeitenkraftwerk (1) ein Wechsel der Strömungsrichtung (33) abgewartet wird.

5. Verfahren nach einem der vorausgehenden Ansprüche, **dadurch gekennzeichnet, dass** die Schwimmvorrichtung (7) wenigstens einen Lastkompensationstank (29.1, 29.2) umfasst, der nach dem Aufsetzen der Kopplungsvorrichtung (4) auf dem Kopplungsgegenstück (5) und vor dem Lösen der Kopplung zwischen der Schwimmvorrichtung (7) und dem Gezeitenkraftwerk (1) befüllt wird.

6. Verfahren nach einem der vorausgehenden Ansprüche, **dadurch gekennzeichnet, dass** die Seilzuganordnung (9) voneinander beabstandete Zugseile (10.1, 10.2) umfasst, die zu separaten Motorwinden (14.1, 14.2) an der Schwimmvorrichtung (7) führen.

7. Verfahren nach Anspruch 6, **dadurch gekennzeichnet, dass** die Zugseile (10.1, 10.2) jeweils über eine Umlenkrolle (16.1, 16.2) geführt werden, wobei jede der Umlenkrollen (16.1, 16.2) über ein zugeordnetes Fixseil (15.1, 15.2) an der Schwimmvorrichtung (7) befestigt ist.

8. Verfahren zur Demontage eines Gezeitenkraftwerks (1) mit einer Wasserturbine (2), die an einer Maschinengondel (3) drehbar gelagert ist, wobei die Maschinengondel (3) mittels einer Kopplungsvorrichtung (4) mit einem Kopplungsgegenstück (5) an einem Turm (6), der das Gezeitenkraftwerk (1) beim Betrieb trägt, in Verbindung steht, umfassend die folgenden Verfahrensschritte:
8.1 eine Schwimmvorrichtung (7) mit einem positiven Auftrieb (A₂) wird mittels einer mit dem Turm (6) in Verbindung stehenden Zugseilanordnung (9) und einer in der Schwimmvorrichtung (7) aufgenommenen Motorwinde (14.1, 14.2) bis zum Anlagekontakt mit der Maschinengondel (3) gezogen;
8.2 die Schwimmvorrichtung (7) wird an die Maschinengondel (3) des Gezeitenkraftwerks (1) zur Schaffung einer Installationseinheit (8) angekoppelt;
8.3 die Installationseinheit (8) wird durch eine Abwicklung der Zugseilanordnung (9) vom Turm (6) abgehoben und bis zur Wasseroberfläche (30) geführt.

9. Verfahren nach Anspruch 8, **dadurch gekennzeichnet, dass** der Schwimmvorrichtung (7) ein Trimmsystem mit Trimmtanks (23.1, 23.2, 23.3, 23.4) zugeordnet ist, das die Lage der Schwimmvorrichtung (7) beim Annähern an die Maschinengondel (3) mit einem solchen Winkel zur Horizontalen einstellt, dass ein erster Anlagekontakt zwischen der Schwimmvorrichtung (7) und der Maschinengondel (3) im Bereich des von der Wasserturbine (2) abgewandten Endes an der Maschinengondel (3) eintritt.

10. Verfahren nach Anspruch 9, **dadurch gekennzeichnet, dass** nach dem ersten Anlagekontakt zwischen der Schwimmvorrichtung (7) und der Maschinengondel (3) die Schwimmvorrichtung (7) in eine Horizontallage gebracht wird.

11. Verfahren nach einem der Ansprüche 9 oder 10, **dadurch gekennzeichnet, dass** ein axialer Anschlag (18) an der Schwimmvorrichtung (7) in Kontakt zu einem Gondelgehäuseabschluss (34) an dem der Wasserturbine (2) gegenüberliegenden Ende der Maschinengondel (3) gebracht wird.

12. Verfahren nach einem der Ansprüche 9-11, **dadurch gekennzeichnet, dass** nach der Kopplung zwischen der Schwimmvorrichtung (7) und der Maschinengondel (3) wenigstens ein Lastkompensationstank (29.1, 29.2) der Schwimmvorrichtung (7) entleert wird.

13. Verfahren nach einem der Ansprüche 9-12, **dadurch gekennzeichnet, dass** vor dem Abheben der Installationseinheit (8) vom Turm (6) ein Wechsel der Strömungsrichtung (33) abgewartet wird.

14. Vorrichtung für die Installation eines Gezeitenkraftwerks (1) mit einer Wasserturbine (2), die an einer Maschinengondel (3) drehbar gelagert ist, wobei der Maschinengondel (3) eine Kopplungsvorrichtung (4) zum Aufsetzen des Gezeitenkraftwerks (1) auf ein Kopplungsgegenstück (5) an einem Turm (6), der das Gezeitenkraftwerk (1) beim Betrieb trägt, zugeordnet ist, umfassend:
eine an das Gezeitenkraftwerk (1) lösbar ankoppelbare Schwimmvorrichtung (7), die Mittel zur Einstellung des Auftriebs (A₁) und des Auftriebspunkts (35) aufweist, die so ausgestaltet sind, dass für eine Installationseinheit (8), die aus der Kopplung der Schwimmvorrichtung (7) mit dem Gezeitenkraftwerk (1) resultiert, ein positiven Auftrieb einstellbar ist;
eine Zugseilanordnung (9), die eine Verbindung zwischen dem Turm (6) und der Schwimmvorrichtung (7) herstellt und welche wenigstens ein Zugseil (10.1, 10.2) umfasst, das mit einer Motorwinde (14.1, 14.2) an der Schwimmvorrichtung (7) in Verbindung steht, wobei die Zugseilanordnung (9) so ausgelegt ist, dass durch den Betrieb der Motorwinde (14.1, 14.2) die Installationseinheit (8) derart zum Turm (6) gezogen wird, dass die Kopplungsvorrichtung (4) zum Kopplungsgegenstück (5) geführt wird.

## Claims

1. A method for the installation of a tidal power plant (1) having a water turbine (2), which is mounted so it is rotatable on a nacelle (3), the nacelle (3) being assigned to a coupling device (4) for placement of the tidal power plant (1) on a coupling counterpart (5) on a tower (6), which carries the tidal power plant (1) during operation, comprising the following method steps:
1.1 a floating device (7) is coupled to the tidal power plant (1) to form an installation unit (8), the buoyancy force and the buoyancy point (35) of the floating device (7) being adjustable and being selected so that the installation unit (8) has a positive buoyancy (A₂);
1.2 the installation unit (8) is connected by means of a traction cable arrangement (9) to the tower (6), the traction cable arrangement (9) being connected using at least one motorized winch (14.1, 14.2) to the floating device (7) and linkage points of the traction cable arrangement (9) being arranged on the floating device (7) and the tower (6), so that during hauling of the traction cable arrangement (9) in against the buoyancy and flow forces acting on the installation unit (8), the coupling device (4) is guided to the coupling counterpart (5);
1.3 after the hauling in of the traction cable arrangement (9) and the placement of the coupling device (4) on the tidal power plant (1) on the coupling counterpart (5) on the tower (6), the coupling between the floating device (7) and the tidal power plant (1) is disengaged and the floating device (7) rises to the water surface (30).

2. The method according to Claim 1, **characterized in that** a trimming device having trimming tanks (23.1, 23.2, 23.3, 23.4) is used to adjust the attitude of the installation unit (8) during the hauling in of the traction cable arrangement (9).

3. The method according to one of the preceding claims, **characterized in that** the hauling in of the traction cable arrangement (9) is performed until the coupling device (4) is placed on the coupling counterpart (5) under incident flow, a flow direction (33) existing which guides the water turbine (2) to the lee side of the tower (6).

4. The method according to one of the preceding claims, **characterized in that** before the disengagement of the coupling between the floating device (7) and the tidal power plant (1), one waits for a change of the flow direction (33).

5. The method according to one of the preceding claims, **characterized in that** the floating device (7) comprises at least one load compensation tank (29.1, 29.2), which is filled after the placement of the coupling device (4) on the coupling counterpart (5) and before the disengagement of the coupling between the floating device (7) and the tidal power plant (1).

6. The method according to one of the preceding claims, **characterized in that** the traction cable arrangement (9) comprises traction cables (10.1, 10.2) spaced apart from one another, which lead to separate motorized winches (14.1, 14.2) on the floating device (7).

7. The method according to Claim 6, **characterized in that** the traction cables (10.1, 10.2) are each guided over a deflection roller (16.1, 16.2), each of the deflection rollers (16.1, 16.2) being fastened via an assigned fixed cable (15.1, 15.2) on the floating device (7).

8. A method for removing a tidal power plant (1) having a water turbine (2), which is mounted so it is rotatable on a nacelle (3), the nacelle (3) being connected by means of a coupling device (4) to a coupling counterpart (5) on a tower (6), which carries the tidal power plant (1) during operation, comprising the following method steps:
8.1 a floating device (7) having a positive buoyancy (A₂) is drawn up to facility contact with the nacelle (3) by means of a traction cable arrangement (9) connected to the tower (6) and a motorized winch (14.1, 14.2) accommodated in the floating device (7);
8.2 the floating device (7) is coupled to the nacelle (3) of the tidal power plant (1) to provide an installation unit (8);
8.3 the installation unit (8) is lifted off of the tower (6) by unwinding the traction cable arrangement (9) and guided up to the water surface (30).

9. The method according to Claim 8, **characterized in that** a trimming system having trimming tanks (23.1, 23.2, 23.3, 23.4) is assigned to the floating device (7), which adjusts the attitude of the floating device (7) upon approach to the nacelle (3) at such an angle to the horizontal that a first facility contact between the floating device (7) and the nacelle (3) occurs on the nacelle (3) in the area of the end facing away from the water turbine (2).

10. The method according to Claim 9, **characterized in that** after the first facility contact between the floating device (7) and the nacelle (3), the floating device (7) is moved into a horizontal attitude.

11. The method according to one of Claims 9 or 10, **characterized in that** an axial stop (18) on the floating device (7) is brought into contact with a nacelle housing terminus (34) on the end of the nacelle (3) diametrically opposite to the water turbine (2).

12. The method according to one of Claims 9 - 11, **characterized in that** after the coupling between the floating device (7) and the nacelle (3), at least one load compensation tank (29.1, 29.2) of the floating device (7) is emptied.

13. The method according to one of Claims 9 - 12, **characterized in that** before the installation unit (8) is lifted off of the tower (6), one waits for a change of the flow direction (33).

14. A device for the installation of a tidal power plant (1) having a water turbine (2), which is mounted so it is rotatable on a nacelle (3), the nacelle (3) being assigned to a coupling device (4) for placement of the tidal power plant (1) on a coupling counterpart (5) on a tower (6), which carries the tidal power plant (1) during operation.

## Revendications

1. Procédé d'installation d'une centrale marémotrice (1) possédant une turbine à eau (2), qui est montée rotative sur une nacelle de machine (3), où un dispositif d'accouplement (4) permettant de poser la centrale marémotrice (1) sur une pièce d'accouplement homologue (5) sur une tour (6) qui supporte la centrale marémotrice (1) pendant l'exploitation, comprenant les étapes suivantes:
1.1 un dispositif de flottaison (7) est accouplé à la centrale marémotrice (1) pour former une unité d'installation (8), tandis que la poussée verticale et le centre de poussée (35) du dispositif de flottaison (7) sont réglables et sont choisis de telle sorte que l'unité d'installation (8) présente une poussée verticale positive (A2);
1.2 l'unité d'installation (8) est reliée à la tour (6) au moyen d'un système de cordage de traction (9), tandis que le système de cordage de traction est en liaison avec au moins un treuil motorisé (14.1 14.2) sur le dispositif de flottaison (7) et des points d'articulation du système de cordage de traction (9) sont disposés au niveau du dispositif de flottaison (7) et de la tour (6) de telle sorte que lors de la rentrée du système de cordage de traction (9), le dispositif d'accouplement (4) est guidé vers la pièce d'accouplement homologue (5) à l'encontre des poussées verticales et des forces du courant qui agissent sur l'unité d'installation (8);
1.3 après la rentrée du système de cordage de traction (9) et la pose du dispositif d'accouplement (4) sur la centrale marémotrice (1) sur la pièce d'accouplement homologue (5) au niveau de la tour (6), l'accouplement entre le dispositif de flottaison (7) et la centrale marée motrice (1) est libéré et le dispositif de flottaison (7) remonte à la surface de l'eau (30).

2. Procédé selon la revendication 1, **caractérisé en ce que** l'on utilise un dispositif d'assiette pourvu de réservoirs d'assiette (23.1, 23.2, 23.3, 23.4) pour régler la position de l'unité d'installation (8) lors de la rentrée du système de cordage de traction (9).

3. Procédé selon l'une quelconque des revendications précédentes, **caractérisé en ce que** la rentrée du système de cordage de traction (9) se déroule jusqu'à la pose du dispositif d'accouplement (4) sur la pièce d'accouplement homologue (5) pendant l'arrivée d'eau, en présence d'un sens d'écoulement (33) guidant la turbine à eau (2) vers la tour (6) sous le vent.

4. Procédé selon l'une quelconque des revendications précédentes, **caractérisé en ce que** l'on attend un changement de sens d'écoulement (33) avant de libérer l'accouplement entre le dispositif de flottaison (7) et la centrale marémotrice (1).

5. Procédé selon l'une quelconque des revendications précédentes, **caractérisé en ce que** le dispositif de flottaison (7) comprend au moins un réservoir de compensation de charge (29.1, 29.2) qui se remplit après la pose du dispositif d'accouplement (4) sur la pièce d'accouplement homologue (5) et avant de libérer l'accouplement entre le dispositif de flottaison (7) et la centrale marémotrice (1).

6. Procédé selon l'une quelconque des revendications précédentes, **caractérisé en ce que** le système de cordage de traction (9) comporte des cordages de traction (10.1, 10.2) espacés l'un de l'autre conduisant à des treuils motorisés séparés (14.1, 14.2) au niveau du dispositif de flottaison (7).

7. Procédé selon la revendication 6, **caractérisé en ce que** les cordages de traction (10.1, 10.2) sont guidés respectivement à l'aide d'un galet de renvoi (16.1, 16.2) tandis que chacun des galets de renvoi (16.1, 16.2) est fixé au dispositif de flottaison (7) par le biais d'un cordage fixe associé (15.1, 15.2).

8. Procédé de démontage d'une centrale marémotrice (1) possédant une turbine à eau (2), qui est montée rotative sur une nacelle de machine (3), dans lequel la nacelle de machine (3) est en liaison avec une pièce d'accouplement homologue (5) au moyen d'un dispositif d'accouplement (4) au niveau d'une tour (6) qui supporte la centrale marémotrice (1) pendant l'exploitation, comprenant les étapes suivantes:
8.1 un dispositif de flottaison (7) ayant une poussée verticale positive (A2) est tiré au moyen d'un système de cordage de traction (9) en liaison avec la tour (6) et d'un treuil motorisé (14.1, 14.2) logé dans le dispositif de flottaison (7) jusqu'au contact d'appui avec la nacelle de machine (3);
8.2 le dispositif de flottaison (7) est accouplé à la nacelle de machine (3) de la centrale marémotrice (1) pour constituer une unité d'installation (8);
8.3 l'unité d'installation (8) est soulevée de la tour (6) en déroulant le système de cordage de traction (9) et guidée jusqu'à la surface de l'eau (30).

9. Procédé selon la revendication 8, **caractérisé en ce qu'**un système d'assiette pourvu de réservoirs d'assiette (23.1, 23.2, 23.3, 23.4) est associé au dispositif de flottaison (7), que la position du dispositif de flottaison (7) se règle à l'horizontale avec un tel angle en s'approchant de la nacelle de machine (3), un premier contact d'appui apparaît entre le dispositif de flottaison (7) et la nacelle de machine (3) dans la région de l'extrémité tournant le dos à la turbine à eau (2) au niveau de la nacelle de machine.

10. Procédé selon la revendication 9, **caractérisé en ce que** le dispositif de flottaison (7) est amené dans une position horizontale après le premier contact d'appui entre le dispositif de flottaison (7) et la nacelle de machine (3).

11. Procédé selon l'une des revendications 9 ou 10, **caractérisé en ce qu'**une butée axiale (18) sur le dispositif de flottaison (7) est amenée au contact d'une terminaison de carcasse de nacelle (34) au niveau de l'extrémité opposée de la nacelle de machine (3) par rapport à la turbine à eau (2).

12. Procédé selon l'une quelconque des revendications 9 à 11, **caractérisé en ce qu'**au moins un réservoir de compensation de charge (29.1, 29.2) du dispositif de flottaison (7) se vide après l'accouplement entre le dispositif de flottaison (7) et la nacelle de machine (3).

13. Procédé selon l'une quelconque des revendications 9 à 12, **caractérisé en ce que** l'on attend un changement de sens d'écoulement (33) avant de soulever l'unité d'installation (8) de la tour (6).

14. Procédé d'installation d'une centrale marémotrice (1) possédant une turbine à eau (2), qui est montée rotative sur une nacelle de machine (3), où un dispositif d'accouplement (4) permettant de poser la centrale marémotrice (1) sur une pièce d'accouplement homologue (5) sur une tour (6) qui supporte la centrale marémotrice (1) pendant l'exploitation, est associé à la nacelle de machine (3), comprenant :
un dispositif de flottaison (7) pouvant s'accoupler de manière amovible à la centrale marémotrice (1), dispositif présentant des moyens pour régler la poussée verticale (A1) et le centre de poussée (35), éléments conçus de telle sorte qu'une poussée verticale positive est réglable pour une unité d'installation (8) résultant de l'accouplement du dispositif de flottaison (7) avec la centrale marémotrice (1);
un système de cordage de traction (9), assurant une liaison entre la tour (6) et le dispositif de flottaison (7) et comportant au moins un cordage de traction (10.1, 10.2), cordage en liaison avec un treuil motorisé (14.1, 14.2) au niveau du dispositif de flottaison (7), tandis que le système de cordage de traction (9) est conçu de telle sorte que l'unité d'installation (8) par le fonctionnement du treuil motorisé (14.1, 14.2) est tirée vers la tour pour guider le dispositif d'accouplement (4) vers la pièce d'accouplement homologue (5).
